# EUROPÄISCHE PATENTSCHRIFT

(11) **EP 3 411 673 B1**
(45) Veröffentlichungstag und Bekanntmachung des Hinweises auf die Patenterteilung: **31.03.2021**
(21) Anmeldenummer: 16703916.3
(22) Anmeldetag: 06.02.2016
(51) Int. Cl.: G01F 11/00, G01F 11/02, G01F 15/14, B65B 1/38, A61J 3/07, B65B 37/20

(54) **STECHHEBER**
PLUNGING SIPHON
ÉPROUVETTE POUR DOSAGE

(43) Veröffentlichungstag der Anmeldung: 12.12.2018
(73) Patentinhaber: Harro Höfliger Verpackungsmaschinen GmbH, 71573 Allmersbach im Tal (DE)
(72) Erfinder: PETERS, Heinrich, 71537 Allmersbach im Tal (DE); GAUS, Philipp, 71537 Allmersbach im Tal (DE); HILD, Marcus, 71537 Allmersbach im Tal (DE); STURM, Julia, 71537 Allmersbach im Tal (DE)
(74) Vertreter: Zurhorst, Stefan
(86) Internationale Anmeldenummer: PCT/EP2016/000205
(87) Internationale Veröffentlichungsnummer: WO 2017/133749

(56) Entgegenhaltungen:
- WO-A1-95/18365
- DE-A1- 2 050 885
- DE-A1- 3 307 135
- DE-A1-102013 105 454
- DE-U1- 20 309 279
- DE-U1- 20 320 604
- DE-U1-202013 004 663

## Beschreibung

Die Erfindung betrifft einen Stechheber zum Dosieren von Pulver der im Oberbegriff des Anspruchs 1 angegebenen Gattung.

Pharmazeutische Präparate, Nahrungsergänzungsmittel oder andere pulver- bzw. granulatförmige Stoffe werden häufig in präzise abgemessenen Verbrauchseinheiten angeboten. Hierzu werden Zielbehälter wie Hartgelatinekapseln, Blisterverpackungen oder dergleichen mit entsprechend abgemessenen Pulvermengen befüllt. Im Regelfall wird dabei eine volumetrische Dosierung der einzelnen Portionen vorgenommen, wobei sich aus dem Dosiervolumen und einer möglichst reproduzierbar einzuhaltenden Dichteverteilung die gewünschte Zielmasse ergibt. Für eine solche volumetrische Dosierung kommen neben Scheiben-, Walzen- oder Membrandosierem auch sogenannte Stechheber zum Einsatz. Solche Stechheber umfassen eine Stechhülse und einen Dosierkolben, wie es beispielsweise in der DE 20 50 885 A1 offenbart ist. Die Stechhülse weist auf ihrer Innenseite eine um ihre Längsachse geschlossen umlaufende innere Umfangswand auf. Die innere Umfangswand verläuft in Richtung der Längsachse bis zum freien Ende der Stechhülse und endet dort in einer um die Längskante umlaufenden Stechkante. Der Dosierkolben ist innerhalb der inneren Umfangswand parallel zur Längsachse verschiebbar geführt. Dabei begrenzt die Stirnfläche des Dosierkolbens in dessen eingefahrener Dosierposition zusammen mit der inneren Umfangswand eine Dosierkammer.

Für den Dosiervorgang wird ein Pulverbett bereitgestellt. Ein oder mehrere Stechheber werden von oben in das Pulverbett eingetaucht. Der jeweilige Dosierkolben wird relativ zur Stechkante so weit eingefahren, dass er in der nun eingenommenen Dosierposition
das gewünschte Volumen der Dosierkammer vorgibt. Aus der DE 20 2013 004 663 U1 ist ein sogenannter Vakuum-Stechheber bekannt, bei dem dann das Volumen der Dosierkammer durch Einwirkung von Unterdruck mit Pulver vollgesaugt wird. Der Unterdruck wird dabei durch einen Filter hindurch eingeleitet, der zwar ein Absaugen der Luft zulässt, der aber dennoch die Pulverpartikel als lockere Ansammlung zurückhält. Als Alternative sind sogenannte Kompaktionsstechheber vorgesehen. Beim Eintauchvorgang füllt sich diese Dosierkammer mit dem Pulver unter Ausbildung eines Pulverpresslings mit dem gewünschten Zielvolumen. Aufgrund der inhärent vorhandenen Haftungskräfte bleibt der Pulverpressling zunächst in der Dosierkammer und kann gemeinsam mit dem Stechheber aus dem Pulverbett herausgehoben werden. Anschließend wird der jeweilige Stechheber über einem zugeordneten Zielbehälter positioniert. Der Pulverpressling wird nun mittels des Dosierkolbens ausgestoßen und fällt in den ihm zugedachten Zielbehälter.

Beobachtungen haben gezeigt, dass der Ausstoßvorgang des Pulverpresslings nicht unproblematisch ist. Insbesondere war zu beobachten, dass der zunächst aufrecht im Stechheber positionierte Pulverpressling beim Ausstoßen und Herabfallen nicht in dieser aufrechten Position bleibt, sondern zum seitlichen Kippen neigt. Ein solches seitliches Kippen beeinträchtigt die Zielgenauigkeit des herabfallenden Pulverpresslings. Es muss aufwändig sichergestellt werden, dass der Pulverpressling vollständig in den Zielbehälter gelangt, ohne aufgrund seiner Kippbewegung mit den Kanten des Behälters in Kollision zu geraten. Insbesondere bei Zielbehältern mit im Vergleich zur Größe des Pulverpresslings kleinen Einfüllöffnungen, wie es bei es bei Steckkapseln der Fall ist, kann es zu Pulververlusten und damit zu einer verringerten Ausbeute an Gut-Kapseln kommen.

Darüber hinaus hat sich der Einsatz von Stechhebern in Verbindung mit einer 100-%-Inprozesskontrolle als schwierig herausgestellt. Der Einsatz von AMV-Sensoren (Advanced Mass Verification) zur kapazitiven Messung der dosierten Pulvereinheiten lieferte bislang nur unzureichend genaue Ergebnisse.

Der Erfindung liegt deshalb die Aufgabe zugrunde, einen gattungsgemäßen Stechheber derart weiterzubilden, dass ein präziserer Ausstoß des Pulverpresslings möglich ist.

Diese Aufgabe wird durch einen Stechheber mit den Merkmalen des Anspruchs 1 gelöst.

Nach der Erfindung ist vorgesehen, dass die innere Umfangswand der Dosierhülse im Bereich der Dosierkammer in einem Führungsabschnitt sowie in einem an den Führungsabschnitt angrenzenden und bis zur Stechkante verlaufenden Ablöseabschnitt aufgeteilt ist. Dabei verläuft die innere Umfangswand im Führungsabschnitt parallel zur Längsachse, während der Ablöseabschnitt einen im Vergleich zum Führungsabschnitt radial erweiterten Querschnitt der Dosierkammer umschließt.

Die Erfindung basiert zunächst auf der Erkenntnis, dass bei herkömmlichen Stechhebern gemäß dem Stand der Technik, welche zylindrisch geformte Dosierkammern aufweisen, der Pulverpressling zunächst ordnungsgemäß achsparallel ausgestoßen wird. Im letzten Moment aber, wenn der Dosierkolben etwa die Stechkante erreicht hat und sich der Pulverpressling von der Stechheberhülse löst, erfährt der Pulverpressling ein Kippmoment und eine daraus folgende Kippbewegung. Für die Ausbildung eines solchen Kippmoments konnten verschiedene Ursachen identifiziert werden. Eine erste Ursache kann in einer ungleichmäßigen Dichteverteilung des Pulverpresslings liegen, da sich die Kräfte, die sich beim Pressen bzw. Komprimieren auf den Pulverpressling auswirken, unter Umständen nicht homogen aufbauen. Aufgrund einer solchen inhomogenen Dichteverteilung kann beim Ausstoßen - kurz vor dem Ablösen des Pulverpresslings aus der Stechheberhülse - eine Seite mit vergleichsweise niedriger Dichte nachgeben. Dies hat zur Folge, dass sich der Pulverpressling auf der entsprechenden Seite früher aus der Hülse löst. Es kommt zu einseitigen Wechselwirkungen zwischen dem Pulverpressling und der Stechheberhülse, was zu dem beobachteten Kippvorgang führt. Weitere Ursachen können in geometrischen Unsymmetrien des Stechhebers liegen, die beispielsweise aus einem notwendig vorhandenen Radialspiel zwischen Dosierkolben und der Stechheberhülse resultieren. Natürlich kommen auch Fertigungstoleranzen wie eine Planlauftoleranz der Stempelstirnfläche als Ursache in Betracht.

Gemäß der Erfindung wird jedoch nicht vorrangig an diesen ohnehin kaum vermeidlichen Imperfektionen angesetzt. Vielmehr wird für die Lösung des zugrunde liegenden Problems die erfindungsgemäße Kombination aus einem Führungsabschnitt und einem Ablöseabschnitt der inneren Umfangswand herangezogen. Beim Ausstoßvorgang führt der erweiterte Querschnitt des Ablöseabschnitts dazu, dass sich der Pulverpressling nicht schlagartig sondern langsam von der Stechheberhülse löst, während er bei diesem Lösevorgang wegen seiner inhärent vorhandenen Rückdehnung immer noch teilweise, aber in abnehmendem Maße geführt wird. Es tritt also ein kontinuierlicher und langsamer Lösungsvorgang ein, weshalb der Pulverpressling keine ruckartig freiwerdenden Kräfte erfährt. Kippmomente, wie sie im Stand der Technik beobachtet wurden, bleiben aus oder sind auf ein solch geringes Maß reduziert, dass der Pulverpressling keine oder keine technisch bedeutsame Kippbewegung beim Ausstoßen und Herabfallen in den Zielbehälter ausführt. In der Folge trifft der herabfallende Pulverpressling exakt auf den Zielort auf, so dass auch Zielbehälter mit vergleichsweise kleiner Öffnung zuverlässig und ohne besondere Vorsichtsmaßnahmen gefüllt werden können. Außerdem hat sich gezeigt, dass ein solcherart lagestabilisierter Pulverpressling sehr viel besser einer AMV-Kontrollmessung unterzogen werden kann. Da der Pulverpressling die Lage seiner Längsachse im Wesentlichen beibehält, während er durch die kapazitive Messstrecke eines AMV-Sensors fällt, ist auch das zugeordnete AMV-Messergebnis entsprechend genau und reproduzierbar. Eine 100-%-Inprozesskontrolle ist auf diese Weise ohne weiteres möglich geworden.

Für die genauere Ausgestaltung des Ablöseabschnitts kommen gemäß der Erfindung verschiedene Bauformen in Betracht. In einer vorteilhaften Ausführungsform umschließen der Ablöseabschnitt und der Führungsabschnitt an ihrer gemeinsamen Grenzlinie den gleichen Querschnitt, wobei sich der vom Ablöseabschnitt umschlossene Querschnitt ausgehend von der Grenzlinie zur Stechkante hin kontinuierlich vergrößert. Insbesondere kommt hierfür eine Ausführungsform in Betracht, bei der der Ablöseabschnitt im Längsschnitt der Stechhülse betrachtet ausgehend von der Grenzlinie zur Stechkante hin linear verläuft. Ein zugehöriger halber Öffnungswinkel liegt vorteilhaft in einem Bereich von 0,5° bis 5,0°, bevorzugt in einem Bereich von 1,0° bis 2,0° und beträgt insbesondere zumindest näherungsweise 1,5°. Alternativ kann es zweckmäßig sein, dass der Ablöseabschnitt im Längsschnitt betrachtet ausgehend von der Grenzlinie zur Stechkante hin konvex gekrümmt verläuft und insbesondere an der Grenzlinie tangential in den Führungsabschnitt übergeht. Eine weitere mögliche vorteilhafte Ausführungsform besteht darin, dass sich der vom Ablöseabschnitt umschlossene Querschnitt an der Grenzlinie unter Ausbildung einer umlaufenden Stufe relativ zu dem vom Führungsabschnitt umschlossenen Querschnitt sprunghaft vergrößert. Jedenfalls ist hierdurch ein kippfreies Ablösen des Pulverpresslings sichergestellt.

Der Dosierkolben weist eine in Umfangsrichtung umlaufende Führungsfläche mit einer axialen Höhe auf. In bevorzugter Weiterbildung der Erfindung umschließt der Führungsabschnitt der Umfangwand in der eingefahrenen Dosierposition des Dosierkolbens die genannte Führungsfläche entlang ihrer gesamten axialen Höhe. In der zurückgezogenen Dosierposition ragt der Dosierkolben also nicht mit seiner Stirnfläche in den vergrößerten Ablöseabschnitt hinein. Dementsprechend bildet sich auch kein übermäßig großer Spalt zwischen der Führungsfläche des Kolbens und der Umfangswand der Dosierhülse aus, was der Ausbildung eines geometrisch exakt definierten Pulverpresslings und damit der Dosiergenauigkeit ebenso zugutekommt wie der gewünschten Fähigkeit zu einer allmählichen und nicht sprunghaften Ablösung vom Stechheber.

Der Führungsabschnitt weist eine in Richtung der Längsachse gemessene Führungslänge auf. In bevorzugter Weiterbildung der Erfindung ist diese Führungslänge größer als die axiale Höhe der Führungsfläche des Dosierkolbens. Dies bedeutet mit anderen Worten, dass der Dosierkolben in seiner eingefahrenen Dosierposition einen Teil des Führungsabschnittes der inneren Umfangswand zur Bildung der Dosierkammer frei lässt. Hierdurch entsteht über die Länge dieses freien Führungsabschnittes ein zugeordneter anteiliger Ausstoßweg, innerhalb dessen eine vollständige Führung des Pulverpresslings ohne Ablöseerscheinungen stattfindet. Dies kann zur Aufrechterhaltung der räumlichen Orientierung des Pulverpresslings beim und nach dem Ausstoßvorgang beitragen.

Allerdings hat sich als vorteilhaft herausgestellt, die Führungslänge nicht beliebig groß zu wählen. Vielmehr ist die Ablöselänge zweckmäßig größer als die Führungslänge. Hierdurch wird über die vergleichsweise große Ablöselänge ein entsprechend sanfter Ablösevorgang ohne signifikanten Führungsverlust erzielt, so dass die Kippneigung weiter vermindert oder sogar beseitigt ist.

In einer bevorzugten Ausführungsform ist die Stechkante scharfkantig ausgebildet. Hierdurch wird die Gleichförmigkeit der ausgestochenen Masse konstanter. Darüber hinaus konnte beobachtet werden, dass die Wechselwirkungen zwischen dem Pulverpressling und der Hülsenöffnung beim Ausstoßen minimiert werden.

Insgesamt wird mit der Erfindung erreicht, dass das Übergabeverhalten des Pulverpresslings in den Zielbehälter sicherer wird. Da der Pulverpressling nahezu gerade fällt, ist die Treffgenauigkeit deutlich verbessert. Der Pulververlust wird minimiert, der Gutanteil der befüllten Behälter wird erhöht und die Ausbeute verbessert. Insgesamt erhöhen sich die Produktivität und die Wirtschaftlichkeit. Es entsteht eine geringere Verschmutzung in der Maschine, was die Einhaltung von GMP-Vorgaben (Good Manufacturing Practice) erleichtert.

Ausführungsbeispiele der Erfindung sind nachfolgend anhand der Zeichnung näher beschrieben. Es zeigen:
- Fig. 1: in einer schematischen Längsschnittdarstellung einen Stechheber nach dem Stand der Technik mit einem in eingefahrener Dosierposition befindlichen Dosierkolben,
- Fig. 2: den Stechheber nach Fig. 1 mit teilweise herausgedrücktem Pulverpressling,
- Fig. 3: den Stechheber nach den Fig. 1 und 2 mit vollständig ausgefahrenem Dosierkolben und mit schief abfallendem Pulverpressling,
- Fig. 4: in einer schematischen Längsschnittdarstellung ein erstes Ausführungsbeispiel eines erfindungsgemäß ausgeführten Stechhebers, wobei sich ein Ablöseabschnitt der inneren Umfangswand kontinuierlich kegelförmig erweitert,
- Fig. 5: eine Variante des Stechhebers nach Fig. 4 mit kontinuierlich gerundet sich erweiterndem Ablöseabschnitt,
- Fig. 6: in einer schematischen Längsschnittdarstellung ein weiteres Ausführungsbeispiel eines erfindungsgemäß ausgeführten Stechhebers, wobei der Ablöseabschnitt der inneren Umfangswand gegenüber dem Führungsabschnitt stufenförmig erweitert ist,
- Fig. 7: eine Variante des Stechhebers nach Fig. 6 mit stufenförmig und konkav gerundet erweitertem Ablöseabschnitt,
- Fig. 8: den erfindungsgemäßen Stechheber nach Fig. 4 mit eingefahrener Dosierposition befindlichen Dosierkolben unter Ausbildung eines Pulverpresslings,
- Fig. 9: die Anordnung nach Fig. 8 mit teilweise ausgefahrenem Dosierkolben und mit im gleichen Maße ausgestoßenem Pulverpressling,
- Fig. 10: die Anordnung nach den Fig. 8 und 9 mit weiter, aber noch nicht vollständig ausgefahrenem Dosierkolben, wobei sich der Pulverpressling vom Ablösebereich der inneren Umfangswand abgelöst hat, und
- Fig. 11: die Anordnung nach den Fig. 8 bis 10 mit vollständig ausgefahrenem Dosierkolben, wobei der Pulverpressling gerade und verkantungsfrei durch eine Messstrecke fällt.

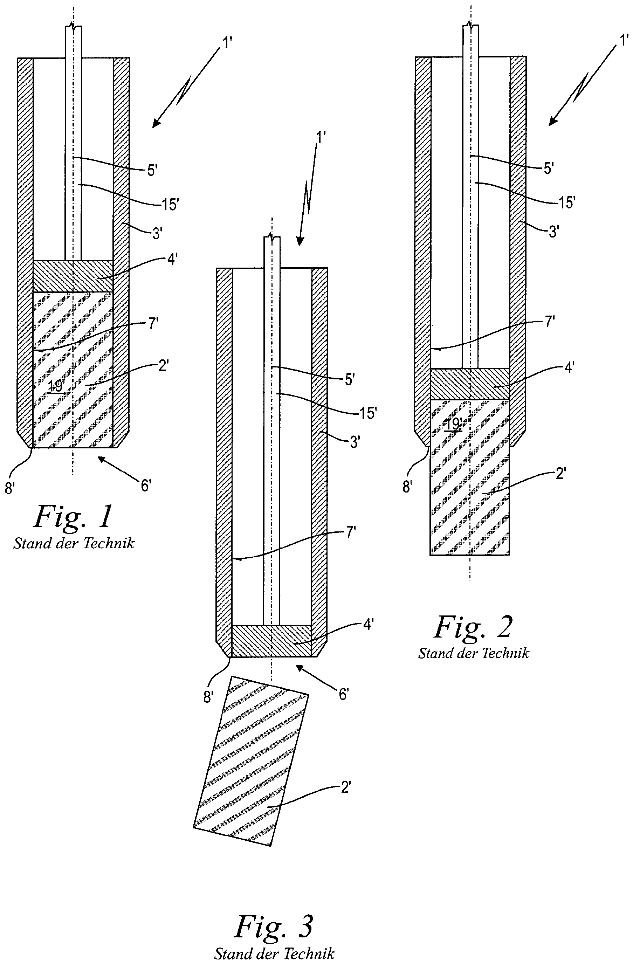

Fig. 1 zeigt in einer schematischen Längsschnittdarstellung einen Stechheber 1' nach dem Stand der Technik. Der Stechheber 1' umfasst eine Stechhülse 3' und einen Dosierkolben 4'. Die Stechhülse 3' erstreckt sich entlang einer Längsachse 5' und weist ein freies Ende 6' auf. Die Stechhülse 3' weist auf ihrer Innenseite eine um die Längsachse 5' geschlossen umlaufende innere Umfangswand 7' auf, welche in Richtung der Längsachse 5' bis zum freien Ende 6' verläuft und dort in einer um die Längsachse 5' geschlossen umlaufenden, stumpfen Stechkante 8' endet. Der Dosierkolben 4' ist innerhalb der Stechhülse 3', genauer innerhalb der inneren Umfangswand 7' parallel zur Längsachse 5' verschiebbar geführt und wird mittels einer Kolbenstange 15' axial positioniert bzw. bewegt.

Gemäß Fig. 1 ist der Dosierkolben 4' relativ zur Stechkante 8' ins Innere der Stechhülse 3' zurückgezogen und hat dabei eine eingefahrene Dosierposition eingenommen. Der Dosierkolben 4' weist eine untere Stirnfläche 14' auf, die in der Dosierposition des Dosierkolbens 4' der Stechkante 8 zugewandt ist, und die hierbei zusammen mit der inneren Umfangswand 7' eine Dosierkammer 19' begrenzt. Zum Dosieren von Pulver wurde der Stechheber 1 von oben mit seiner Stechkante 8' voraus in ein nicht dargestelltes Pulverbett eingetaucht. In der Dosierkammer 19' hat sich ein Pulverpressling 2' gebildet, welcher mittels des Stechhebers 1 aus dem genannten Pulverbett ausgestochen und herausgehoben wurde.

In diesem Zustand wird der Stechheber 1' zusammen mit dem in der Dosierkammer 19' befindlichen Pulverpressling 2' zum Zielort verfahren und dort mittels des Dosierkolbens 4' ausgestoßen, wie es in der schematischen Längsschnittdarstellung nach Fig. 2 dargestellt ist. Im Vergleich zur eingefahrenen Dosierposition nach Fig. 1 ist der Dosierkolben 4' mittels seiner Kolbenstange 15' in Richtung zur Stechkante 8 verschoben, wobei jedoch die Stirnfläche 14' die Stechkante 8' noch nicht erreicht hat. Der Pulverpressling 2' ist teilweise aus der Stechhülse 3 herausgeschoben. Ein Teil von ihm ragt bereits über die Stechkante 8' nach unten hervor, während ein weiterer Teil noch von der inneren Umfangwand 7' geführt ist. In der Folge ist der Pulverpressling 2' im Wesentlichen koaxial zur Längsachse 5' ausgerichtet.

Schließlich zeigt Fig. 3 die Anordnung nach den Fig. 1 und 2 mit vollständig ausgefahrenem Dosierkolben 4', dessen Stirnfläche 14' die Stechkante 8' erreicht hat. Der Pulverpressling 2' hat sich von der Stechhülse 3' und dem Dosierkolben 4' gelöst und fällt in seinen nicht dargestellten Zielbehälter. Bei der hier gezeigten Ausführung des Stechhebers 1' nach dem Stand der Technik wurde beobachtet, dass der Pulverpressling 2' im Vergleich zur koaxialen Ausrichtung nach den Fig. 1 und 2 in unkontrollierbarer Weise verkippt ist und unter Verlust der koaxialen Ausrichtung in den Zielbehälter fällt. Dies verringert die Zielgenauigkeit beim Einfüllen in den Zielbehälter. Außerdem hat sich gezeigt, dass eine 100-%-Inprozesskontrolle praktisch nicht durchführbar ist.

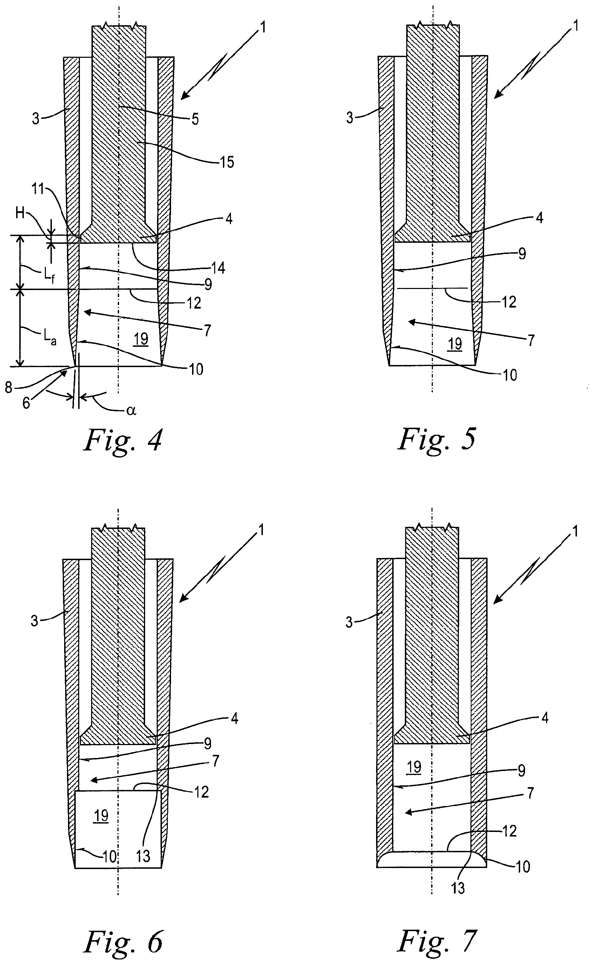

Fig. 4 zeigt in einer schematischen Längsschnittdarstellung ein erstes Ausführungsbeispiel eines erfindungsgemäß weitergebildeten Stechhebers 1, welcher ebenso wie der Stechheber 1' nach dem Stand der Technik der Fig. 1 bis 3 zum Dosieren von Pulver vorgesehen ist. Der Stechheber 1 ist hier in vertikal aufrecht stehender Betriebsposition dargestellt. Er umfasst eine Stechhülse 3 und einen Dosierkolben 4 mit einer Stirnfläche 14, wobei sich der Dosierkolben 4 am unteren Ende einer Kolbenstange 15 befindet und im gezeigten Ausführungsbeispiel einteilig mit dieser ausgebildet ist. Insgesamt erstreckt sich der Stechheber 1 einschließlich seiner Stechhülse 3, seines Dosierkolbens 4 und seiner Kolbenstange 15 entlang einer aufrechten, vertikal positionierten Längsachse 5. Die Stechhülse 3 weist auf ihrer Innenseite eine um die Längsachse 5 geschlossen umlaufende innere Umfangswand 7 auf, welche sich in Richtung der Längsachse 5 bis zu einem unteren, freien Ende 6 der Stechhülse 3 verläuft und dort in einer um die Längsachse 5 umlaufenden Stechkante 8 endet. Abweichend vom Stand der Technik nach den Fig. 1 bis 3 ist die Stechkante 8 der erfindungsgemäßen Ausgestaltung scharfkantig ausgebildet.

Der Dosierkolben 4 ist innerhalb der Stechhülse 3 parallel zur Längsachse 5 verschiebbar geführt, wobei eine axiale Positionierung und eine axiale Hubbewegung des Dosierkolbens 4 mittels der Kolbenstange 15 über einen nicht dargestellten Hubantrieb herbeigeführt wird. Der Dosierkolben 4 weist radial außen eine umlaufende Führungsfläche 11 auf, die von der inneren Umfangswand 7 der Stechhülse 3 umschlossen ist.

Analog zum Stand der Technik nach Fig. 1 ist der Dosierkolben 4 in der Darstellung nach Fig. 4 relativ zur Stechkante 8 in die Stechhülse 3 hinein nach oben in eine eingefahrene Dosierposition zurückgezogen. Hierbei begrenzt die Stirnfläche 14 des Dosierkolbens 4 zusammen mit der inneren Umfangswand 7 eine Dosierkammer 19, welche an der umlaufenden Stechkante 8 nach unten hin offen ist. Zwischen der Führungsfläche 11 und der inneren Umfangswand 7 befindet sich ein Spalt bzw. ein definiertes radiales Spiel, um eine Entlüftung der Dosierkammer 19 beim Ausstechvorgang, also beim Befüllen mit Pulver zu begünstigen.

Abweichend vom Stand der Technik nach den Fig. 1 bis 3 ist die innere Umfangswand 7 im Bereich der Dosierkammer 19 in einem Führungsabschnitt 9 sowie in einen nach unten an den Führungsabschnitt 9 angrenzenden und bis zur Stechkante 8 verlaufenden Ablöseabschnitt 10 aufgeteilt. In der Axialrichtung verläuft also der Führungsabschnitt 9 ausgehend von der Rückseite des in der eingefahrenen Dosierposition befindlichen Dosierkolben 4, also vom oberen bzw. rückwärtigen Ende der Führungsfläche 11 bis zum axialen Beginn des Ablöseabschnitts 10, wo der Führungsabschnitt 9 entlang einer umlaufenden Grenzlinie 12 an den Ablöseabschnitt 10 angrenzt. Der Ablöseabschnitt 10 seinerseits verläuft in der Axialrichtung ausgehend von der Grenzlinie 12 bis zur umlaufenden Stechkante 8.

Gemäß Fig. 4 weist die umlaufende Führungsfläche 11 des Dosierkolbens 4 eine axiale Höhe H auf, während der Führungsabschnitt 9 der inneren Umfangswand 7 eine in Richtung der Längsachse 5 gemessene Führungslänge L_{f} aufweist. In der gezeigten eingefahrenen Dosierposition kommt der Dosierkolben 4 zumindest mit einem Teil seiner umlaufenden Führungsfläche 11 im Führungsabschnitt 9 zu liegen. Dabei kann es möglich sein, dass in dieser eingefahrenen Dosierposition die Stirnfläche 14 bereits in den Ablöseabschnitt 10 hineinragt. Im gezeigten bevorzugten Ausführungsbeispiel umschließt der Führungsabschnitt 9 der Umfangwand 7 jedoch die Führungsfläche 11 in der eingefahrenen Dosierposition entlang ihrer gesamten axialen Höhe H. Dabei kann es zweckmäßig sein, dass die Stirnfläche 14 auf der Höhe der Grenzlinie 12 zu liegen kommt. In diesem Falle wäre dann die Führungslänge L_{f} gleich der axialen Höhe H. Im gezeigten bevorzugten Ausführungsbeispiel ist die Führungslänge L_{f} jedoch größer als die axiale Höhe H der Führungsfläche 11 des Dosierkolbens 4, so dass die Stirnfläche 14 in der eingefahrenen Dosierposition des Kolbens 4 oberhalb der Grenzlinie 12 positioniert ist. Ein nach unten über die Stirnfläche 14 hinausführender Bereich des Führungsabschnittes 9 bildet demnach unmittelbar einen Anteil der Umfangswand der Dosierkammer 19. Darüber hinaus weist noch der ebenfalls anteilig die Umfangswand der Dosierkammer 19 bildende Ablöseabschnitt 10 eine in Richtung der Längsachse 5 von der Grenzlinie 12 bis zur Stechkante 8 gemessene Ablöselänge La auf, welche zwar nicht notwendig, wohl aber bevorzugt wie hier gezeigt größer als die Führungslänge L_{f} ist.

Verschiedene Querschnitte des von der inneren Umfangswand 7 umschlossenen Innenraums der Dosierhülse 3 werden in Ebenen ermittelt, die senkrecht zur Längsachse 5 liegen. Entlang der Längsachse 5 umschließt der Führungsabschnitt 9 einen konstanten Querschnitt, der sich jenseits des Dosierkolbens 4 bis in den Bereich der Kolbenstange 15 fortsetzt. Mit anderen Worten bildet die innere Umfangswand 7 im Führungsabschnitt 9 sowie in dem nach oben daran anschließenden Bereich im geometrischen Sinne einen allgemeinen Zylindermantel, der hier im konkreten Ausführungsbeispiel als Kreiszylinder ausgebildet ist, aber auch andere geeignete Querschnittsformen umschließen kann. Im Vergleich hierzu weist die Dosierkammer 19 größere Querschnitte auf, die vom Ablöseabschnitt 10 der inneren Umfangswand 7 umschlossen sind.

Fig. 5 zeigt in einer schematischen Längsschnittdarstellung eine Variante der Anordnung nach Fig. 4. In beiden Fällen umschließen die jeweiligen Ablöseabschnitte 10 an der Grenzlinie 12 den gleichen Querschnitt wie der Führungsabschnitt 9, wobei sich der vom Ablöseabschnitt 10 umschlossene Querschnitt ausgehend von der Grenzlinie 12 entlang der Längsachse 5 bis hin zur Stechkante 8 kontinuierlich vergrößert. Im Falle des Ausführungsbeispiels nach Fig. 5 verläuft der Ablöseabschnitt 10 im Längsschnitt der Stechhülse 3 betrachtet ausgehend von der Grenzlinie 12 zur Stechkante 8 hin in einer konvexen Krümmung, wobei diese konvexe Krümmung tangential, also ohne Ausbildung einer Kante in den Führungsabschnitt 9 übergeht. Abweichend hiervon verläuft der Ablöseabschnitt 10 der inneren Umfangswand 7 nach Fig. 4 im Längsschnitt der Stechhülse 3 betrachtet linear von der Grenzlinie 12 zur Stechkante 8 hin, und zwar relativ zur Längsachse 5 in einem halben Öffnungswinkel a. Der halbe Öffnungswinkel α liegt vorteilhaft in einem Bereich von 0,5° bis 5,0°, bevorzugt in einem Bereich von 1,0° bis 2,0° und beträgt insbesondere zumindest näherungsweise 1,5°. Jedenfalls bildet sich aufgrund des genannten linearen Verlaufs entlang der Grenzlinie 12 eine umlaufende Kante aus.

In den Fig. 6 und 7 sind weitere Varianten der erfindungsgemäßen Ausführungsformen nach den Fig. 4 und 5 in schematischer Längsschnittdarstellung gezeigt. Abweichend von den Fig. 4 und 5 vergrößert sich in den Ausführungsbeispielen nach den Fig. 6 und 7 der vom Ablöseabschnitt 10 umschlossene Querschnitt sprunghaft an der Grenzlinie 12 relativ zu dem von Führungsabschnitt 9 umschlossenen Querschnitt, wobei sich eine umlaufende Stufe 13 ausbildet. Im Ausführungsbeispiel nach Fig. 6 verläuft der Ablöseabschnitt 10 der inneren Umfangswand 7 im Längsschnitt betrachtet parallel zur Längsachse 5, bildet also ebenso wie der Führungsabschnitt 9 einen geometrisch allgemeinen Zylinder, welcher hier als Kreiszylinder mit im Vergleich zum Führungsabschnitt 9 erweiterten Querschnitt ausgebildet ist. Im Ausführungsbeispiel nach Fig. 7 verläuft der Ablöseabschnitt 10 im Längsschnitt betrachtet entlang einer konkav gekrümmten Linie. Sofern nicht ausführlich anders erwähnt oder dargestellt, stimmen die Ausführungsbeispiele nach den Fig. 4 bis 7 in den übrigen Merkmalen und Bezugszeichen miteinander überein.

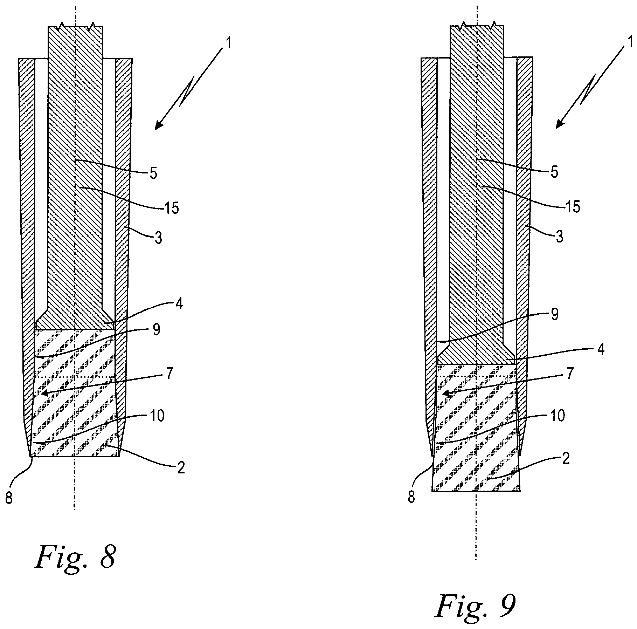

Die Fig. 8 bis 11 zeigen als Phasenbilder den mit dem Stechheber nach Fig. 4 ausgeführten Dosier- und Ausstoßvorgang, wobei jedoch sinngemäß das Gleiche auch für alle anderen erfindungsgemäßen Ausführungsformen einschließlich derer der Fig. 5 bis 7 gilt. Gemäß Fig. 8 ist der Dosierkolben 4 mittels seiner Kolbenstange 15 in die eingefahrene Dosierposition gemäß Fig. 4 zurückgezogen. Analog zum Stand der Technik nach Fig. 1 wurde der Stechheber 1 vorab in ein nicht dargestelltes Pulverbett eingetaucht, wobei er mittels seiner Stechkante 8 eine Teilmenge des Pulvers aus dem Pulverbett ausgestochen hat. Die in Fig. 4 gezeigte Dosierkammer 19 hat sich mit dem Pulver unter Ausbildung eines Pulverpresslings 2 gefüllt, wobei elastische Rückstellkräfte im gepressten Pulvermaterial den Pulverpressling 2 unter radialer Vorspannung von innen gegen die Umfangswand 7 drücken. Der Pulverpressling 2 hat dabei das Volumen der Dosierkammer 19 (Fig. 4).

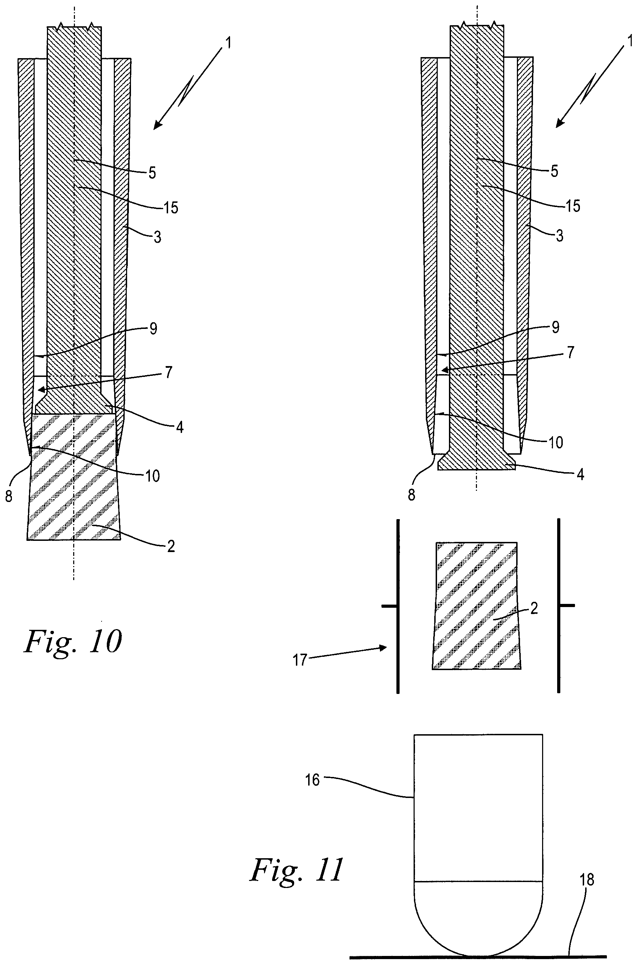

Der solchermaßen gebildete bzw. ausgestochene Pulverpressling 2 wird nun mittels des Stechhebers 1 zum Zielort verfahren, wo er mittels des Dosierkolbens 4 ausgestoßen wird. Eine erste Phase des Ausstoßvorganges ist in der schematischen Längsschnittdarstellung nach Fig. 9 gezeigt, wobei der Dosierkolben 4 gegenüber der Dosierposition nach Fig. 8 bereits ein Stück ausgefahren ist, jedoch die Grenzlinie 12 noch nicht überfahren hat. Dabei ist in Fig. 9 erkennbar, dass der Pulverpressling 2 bereits teilweise von der inneren Umfangswand 7, nämlich im Bereich des Ablöseabschnitts 10 abgelöst ist, während er insbesondere im Führungsabschnitt 9 noch an der inneren Umfangswand 7 anliegt und geführt wird. Dieser anteilige Ablösevorgang des Pulverpresslings 2 von der inneren Umfangswand 7 der Stechhülse 3 wird mit dem weiteren Vorschub des Dosierkolbens 4 zur Stechkante 8 hin fortgesetzt, wie es in der schematischen Längsschnittdarstellung nach Fig. 10 dargestellt ist. Hier hat der Dosierkolben 4 die Grenzlinie 12 bereits überfahren. Elastische Rückstellkräfte des Pulverpresslings 2 reichen in radialer Richtung nur noch aus, dass es zu einem geringen Kontakt zwischen dem oberen Bereich des Pulverpressling 2 und der inneren Umfangswand 7 kommt. Mit fortschreitendem Vorschub und folglich größer werdendem wirksamen Querschnitt des Ablöseabschnittes 10 wird dieser Kontakt immer geringer. Der Pulverpressling 2 löst sich damit nach und nach vollständig von der Stechhülse 3 bzw. von der inneren Umfangswand 7 ab, wobei er jedoch zunächst noch weiter vom Dosierkolben 4 nach unten geführt wird.

Schließlich hat der Dosierkolben 4 gemäß der schematischen Längsschnittdarstellung nach Fig. 11 seine untere Ausstoßposition erreicht, wobei er mit seiner gesamten Führungsfläche 11 nach unten über die Stechkante 8 geschoben ist. Zwischen der Führungsfläche 11 und der Stechkante 8 hat sich ein Spalt ausgebildet, durch den der Zwischenraum zwischen der inneren Umfangswand 7, dem Dosierkolben 4 und der Kolbenstange 15 gereinigt werden kann. Schließlich hat sich auch der Pulverpressling 2 vom Dosierkolben 4 gelöst, ohne jedoch dabei die im Stand der Technik nach den Fig. 1 bis 3 beobachtete Kippstörung zu erfahren. Vielmehr fällt der Pulverpressling 2 nun nach unten in den dort positionierten Zielbehälter, wozu hier beispielhaft ein Kapselunterteil 16 einer Steckkapsel angedeutet ist. Beim Fallen bleibt die Längsachse des Pulverpresslings 2 im Wesentlichen koaxial zur Längsachse 5 des Stechhebers 1. Dies erlaubt eine kapazitive AMV-Messung mittels eines schematisch angedeuteten Kondensators 17. Ergänzend oder alternativ kann auch eine schematisch angedeutete Waage 18 für den mit dem Pulverpressling 2 gefüllten Zielbehälter zum Einsatz kommen. Jedenfalls ist durch die Beibehaltung der aufrechten Achslage des Pulverpresslings 2 eine 100-%-Inprozesskontrolle der Masse des volumetrisch abgemessenen Pulverpresslings 2 möglich geworden.

## Patentansprüche

1. Stechheber (1) zum Dosieren von Pulver, umfassend eine Stechhülse (3) und einen Dosierkolben (4) mit einer Stirnfläche (14) zum Ausstoßen des Pulvers aus der Stechhülse (3), wobei sich die Stechhülse (3) entlang einer Längsachse (5) erstreckt und ein freies Ende (6) aufweist, wobei die Stechhülse (3) auf ihrer Innenseite eine um die Längsachse (5) geschlossen umlaufende innere Umfangswand (7) aufweist, wobei die innere Umfangswand (7) in Richtung der Längsachse (5) bis zum freien Ende (6) der Stechhülse (3) verläuft und dort in einer um die Längsachse (5) umlaufenden Stechkante (8) endet, wobei der Dosierkolben (4) innerhalb der inneren Umfangswand (7) parallel zur Längsachse (5) verschiebbar geführt ist, und wobei die Stirnfläche (14) in einer eingefahrenen Dosierposition des Dosierkolbens (4) zusammen mit der inneren Umfangswand (7) eine Dosierkammer (19) begrenzt,
**dadurch gekennzeichnet, dass** die innere Umfangswand (7) im Bereich der Dosierkammer (19) in einen Führungsabschnitt (9) sowie in einen an den Führungsabschnitt (9) angrenzenden und bis zur Stechkante (8) verlaufenden Ablöseabschnitt (10) aufgeteilt ist, wobei die innere Umfangswand (7) im Führungsabschnitt (9) parallel zur Längsachse (5) verläuft, und wobei der Ablöseabschnitt (10) einen im Vergleich zum Führungsabschnitt (9) radial erweiterten Querschnitt der Dosierkammer (19) umschließt.

2. Stechheber nach Anspruch 1,
**dadurch gekennzeichnet, dass** der Ablöseabschnitt (10) entlang einer Grenzlinie (12) an den Führungsabschnitt (9) angrenzt und an der Grenzlinie (12) den gleichen Querschnitt wie der Führungsabschnitt (9) umschließt, und dass sich der vom Ablöseabschnitt (10) umschlossene Querschnitt ausgehend von der Grenzlinie (12) zur Stechkante (8) hin kontinuierlich vergrößert.

3. Stechheber nach Anspruch 2,
**dadurch gekennzeichnet, dass** der Ablöseabschnitt (10) der inneren Umfangswand (7) im Längsschnitt der Stechhülse (3) betrachtet ausgehend von der Grenzlinie (12) zur Stechkante (8) hin linear verläuft.

4. Stechheber nach Anspruch 3,
**dadurch gekennzeichnet, dass** der Ablöseabschnitt (10) im Längsschnitt der Stechhülse (3) betrachtet relativ zur Längsachse (5) in einem halben Öffnungswinkel (a) verläuft, wobei der halbe Öffnungswinkel (a) in einem Bereich von 0,5° bis 5,0° liegt, bevorzugt in einem Bereich von 1,0° bis 2,0° liegt, und insbesondere zumindest näherungsweise 1,5° beträgt.

5. Stechheber nach Anspruch 2,
**dadurch gekennzeichnet, dass** der Ablöseabschnitt (10) der inneren Umfangswand (7) im Längsschnitt der Stechhülse (3) betrachtet ausgehend von der Grenzlinie (12) zur Stechkante (8) hin konvex gekrümmt verläuft und insbesondere an der Grenzlinie (12) tangential in den Führungsabschnitt (9) übergeht.

6. Stechheber nach Anspruch 1,
**dadurch gekennzeichnet, dass** der Ablöseabschnitt (10) entlang einer Grenzlinie (12) an den Führungsabschnitt (9) angrenzt, und dass sich der vom Ablöseabschnitt (10) umschlossene Querschnitt an der Grenzlinie (12) unter Ausbildung einer umlaufenden Stufe (13) relativ zu dem vom Führungsabschnitt (9) umschlossenen Querschnitt sprunghaft vergrößert.

7. Stechheber nach einem der Ansprüche 1 bis 6,
**dadurch gekennzeichnet, dass** der Dosierkolben (4) eine in Umfangsrichtung umlaufende Führungsfläche (11) mit einer axialen Höhe (H) aufweist, und dass der Führungsabschnitt (9) der Umfangswand (7) in der eingefahrenen Dosierposition des Dosierkolbens (4) die Führungsfläche (11) entlang ihrer gesamten axialen Höhe (H) umschließt.

8. Stechheber nach Anspruch 7,
**dadurch gekennzeichnet, dass** der Führungsabschnitt (9) eine in Richtung der Längsachse (5) gemessene Führungslänge (L_{f}) aufweist, und dass die Führungslänge (L_{f}) größer als die axiale Höhe (H) der Führungsfläche (11) des Dosierkolbens (4) ist.

9. Stechheber nach einem der Ansprüche 1 bis 8,
**dadurch gekennzeichnet, dass** der Ablöseabschnitt (10) eine in Richtung der Längsachse (5) gemessene Ablöselänge (Lₐ) aufweist, dass der Führungsabschnitt (9) eine in Richtung der Längsachse (5) gemessene Führungslänge (L_{f}) aufweist, und dass die Ablöselänge (Lₐ) größer als die Führungslänge (L_{f}) ist.

10. Stechheber nach einem der Ansprüche 1 bis 9,
**dadurch gekennzeichnet, dass** die Stechkante (8) scharfkantig ausgebildet ist.

## Claims

1. Plunging siphon (1) for dosing powder, comprising a plunging sleeve (3) and a dosing piston (4) with an end face (14) for ejecting the powder from the plunging sleeve (3), wherein the plunging sleeve (3) extends along a longitudinal axis (5) and has a free end (6), wherein the plunging sleeve (3) has a closed inner circumferential wall (7) extending continuously around the longitudinal axis (5) on its inside, wherein the inner circumferential wall (7) extends in the direction of the longitudinal axis (5) to the free end (6) of the plunging sleeve (3) and there terminates in a plunging edge (8) extending continuously around the longitudinal axis (5), wherein the dosing piston (4) is guided within the inner circumferential wall (7) for displacement parallel to the longitudinal axis (5), and wherein the end face (14) bounds a dosing chamber (19) together with the inner circumferential wall (7) in a retracted dosing position of the dosing piston (4),
**characterised in that** the inner circumferential wall (7) is in the region of the dosing chamber (19) divided into a guide section (9) and a release section (10) adjoining the guide section (9) and extending to the plunging edge (8), wherein the inner circumferential wall (7) extends parallel to the longitudinal axis (5) in the guide section (9), and wherein the release section (10) encloses a cross-section of the dosing chamber (19) which is radially widened compared to the guide section (9).

2. Plunging siphon according to claim 1,
**characterised in that** the release section (10) bounds the guide section (9) along a boundary line (12) and encloses at the boundary line (12) the same cross-section as the guide section (9), and **in that** the cross-section enclosed by the release section (10) increases continuously from the boundary line (12) towards the plunging edge (8).

3. Plunging siphon according to claim 2,
**characterised in that** the release section (10) of the inner circumferential wall (7) extends in a linear fashion from the boundary line (12) towards the plunging edge (8) as viewed in the longitudinal section of the plunging sleeve (3).

4. Plunging siphon according to claim 3,
**characterised in that** the release section (10) extends at a half opening angle (α) relative to the longitudinal axis (5) as viewed in the longitudinal section of the plunging sleeve (3), the half opening angle (α) being in a range of 0.5° to 5.0°, preferably in a range of 1.0° to 2.0°, being in particular at least approximately 1.5°.

5. Plunging siphon according to claim 2,
**characterised in that** the release section (10) of the inner circumferential wall (7) extends with a convex curvature from the boundary line (12) towards the plunging edge (8) as viewed in the longitudinal section of the plunging sleeve (3) and in particular merges tangentially into the guide section (9) at the boundary line (12).

6. Plunging siphon according to claim 1,
**characterised in that** the release section (10) adjoins the guide section (9) along a boundary line (12), and **in that** the cross-section enclosed by the release section (10) increases discontinuously at the boundary line (12) relative to the cross-section enclosed by the guide section (9) while forming a continuous step (13).

7. Plunging siphon according to any of claims 1 to 6,
**characterised in that** the dosing piston (4) has a guide surface (11), which is continuous in the circumferential direction and has an axial height (H), and **in that** the guide section (9) of the circumferential wall (7) encloses in the retracted dosing position of the dosing piston (4) the guide surface (11) along its entire axial height (H).

8. Plunging siphon according to claim 7,
**characterised in that** the guide section (9) has a guide length (L_{f}) as measured in the direction of the longitudinal axis (5), and **in that** the guide length (L_{f}) is greater than the axial height (H) of the guide surface (11) of the dosing piston (4).

9. Plunging siphon according to any of claims 1 to 8,
**characterised in that** the release section (10) has a release length (Lₐ) as measured in the direction of the longitudinal axis (5), **in that** the guide section (9) has a guide length (L_{f}) as measured in the direction of the longitudinal axis (5), and **in that** the release length (Lₐ) is greater than the guide length (L_{f}).

10. Plunging siphon according to any of claims 1 to 9,
**characterised in that** the plunging edge (8) is designed to be sharp-edged.

## Revendications

1. Échantillonneur (1) pour le dosage de poudre, comprenant un manchon d'échantillonnage (3) et un piston de dosage (4) avec une surface frontale (14) pour éjecter la poudre du manchon d'échantillonnage (3), dans lequel le manchon d'échantillonnage (3) s'étend le long d'un axe longitudinal (5) et présente une extrémité libre (6), dans lequel le manchon d'échantillonnage (3) présente de son côté intérieur une paroi circonférentielle intérieure (7) s'étendant de manière fermée autour de l'axe longitudinal (5), dans lequel la paroi circonférentielle intérieure (7) s'étend dans la direction de l'axe longitudinal (5) jusqu'à l'extrémité libre (6) du manchon d'échantillonnage (3) et, là, se termine par une arête d'échantillonnage (8) s'étendant autour de l'axe longitudinal (5), dans lequel le piston de dosage (4) est guidé de manière coulissante à l'intérieur de la paroi circonférentielle intérieure (7) parallèlement à l'axe longitudinal (5), et dans lequel la surface frontale (14) dans une position de dosage rentrée du piston de dosage (4) délimite conjointement avec la paroi circonférentielle intérieure (7) une chambre de dosage (19),
**caractérisé en ce que** la paroi circonférentielle intérieure (7) est divisée dans la zone de la chambre de dosage (19) en une section de guidage (9) et une section de détachement (10) contiguë à la section de guidage (9) et s'étendant jusqu'à l'arête d'échantillonnage (8), dans lequel la paroi circonférentielle intérieure (7) s'étend dans la section de guidage (9) parallèlement à l'axe longitudinal (5), et dans lequel la section de détachement (10) entoure une section transversale de la chambre de dosage (19) radialement élargie par rapport à la section de guidage (9).

2. Échantillonneur selon la revendication 1,
**caractérisé en ce que** la section de détachement (10) est contiguë à la section de guidage (9) le long d'une ligne de démarcation (12) et entoure en la ligne de démarcation (12) la même section transversale que la section de guidage (9), et que la section transversale entourée par la section de détachement (10) s'agrandit de manière continue depuis la ligne de démarcation (12) en direction de l'arête d'échantillonnage (8).

3. Échantillonneur selon la revendication 2,
**caractérisé en ce que** la section de détachement (10) de la paroi circonférentielle intérieure (7), regardée en coupe longitudinale du manchon d'échantillonnage (3), s'étend linéairement depuis de la ligne de démarcation (12) en direction de l'arête d'échantillonnage (8).

4. Échantillonneur selon la revendication 3,
**caractérisé en ce que** la section de détachement (10), regardée en coupe longitudinale du manchon d'échantillonnage (3), s'étend avec un demi-angle d'ouverture (a) par rapport à l'axe longitudinal (5), dans lequel le demi-angle d'ouverture (a) est situé dans une plage de 0,5° à 5,0°, de préférence dans une plage de 1,0° à 2,0°, et en particulier d'au moins approximativement 1,5°.

5. Échantillonneur selon la revendication 2,
**caractérisé en ce que** la section de détachement (10) de la paroi circonférentielle intérieure (7), regardée en coupe longitudinale du manchon d'échantillonnage (3), s'étend avec une forme courbe convexe à partir de la ligne de démarcation (12) en direction de l'arête d'échantillonnage (8) et se prolonge en particulier en la ligne de démarcation (12) tangentiellement par la section de guidage (9).

6. Échantillonneur selon la revendication 1,
**caractérisé en ce que** la section de détachement (10) est contigüe le long d'une ligne de démarcation (12) à la section de guidage (9), et que la section transversale entourée par la section de détachement (10) s'agrandit brusquement au niveau de la ligne de démarcation (12) par rapport à la section transversale entourée par la section de guidage (9) en formant un degré périphérique (13)

7. Échantillonneur selon l'une des revendications 1 à 6,
**caractérisé en ce que** le piston de dosage (4) présente une surface de guidage (11) avec une hauteur axiale (H) qui s'étend dans la direction périphérique, et que la section de guidage (9) de la paroi circonférentielle (7) entoure dans la position de dosage rentrée du piston de dosage (4) la section de guidage (11), le long de toute sa hauteur axiale (H).

8. Échantillonneur selon la revendication 7,
**caractérisé en ce que** la section de guidage (9) présente une longueur de guidage (L_{f}) mesurée dans la direction de l'axe longitudinal (5), et que la longueur de guidage (L_{f}) est plus grande que la hauteur axiale (H) de la surface de guidage (11) du piston de dosage (4).

9. Échantillonneur selon l'une des revendications 1 à 8,
**caractérisé en ce que** la section de détachement (10) présente une longueur de détachement (Lₐ) mesurée dans la direction de l'axe longitudinal (5), que la section de guidage (9) présente une longueur de guidage (L_{f}) mesurée dans la direction de l'axe longitudinal (5), et que la longueur de détachement (Lₐ) est plus grande que la longueur de guidage (L_{f}).

10. Échantillonneur selon l'une des revendications 1 à 9,
**caractérisé en ce que** l'arête d'échantillonnage (8) est formée en arête vive.
